# EUROPÄISCHE PATENTSCHRIFT

(11) **EP 1 882 299 B1**
(45) Veröffentlichungstag und Bekanntmachung des Hinweises auf die Patenterteilung: **06.01.2010**
(21) Anmeldenummer: 06742297.2
(22) Anmeldetag: 29.04.2006
(51) Int. Cl.: H02M 7/797, H02M 7/538

(54) **BIDIREKTIONALER BATTERIEWECHSELRICHTER**
BI-DIRECTIONAL BATTERY POWER INVERTER
ONDULEUR DE BATTERIE BIDIRECTIONNEL

(30) Priorität: 20.05.2005 DE 102005023290
(43) Veröffentlichungstag der Anmeldung: 30.01.2008
(73) Patentinhaber: SMA Solar Technology AG, 34266 Niestetal (DE)
(72) Erfinder: FALK, Andreas, 34131 Kassel (DE)
(74) Vertreter: Walther, Walther & Hinz GbR
(86) Internationale Anmeldenummer: PCT/DE2006/000755
(87) Internationale Veröffentlichungsnummer: WO 2006/125410

(56) Entgegenhaltungen:
- EP-A2- 0 820 893
- EP-A2- 1 458 084
- WO-A-96/18937
- WO-A-2005/036684
- DE-A1- 4 013 506
- US-A1- 2003 142 513
- US-B2- 6 507 503
- HOFSAJER I W ET AL: "A comparative study of some electromagnetically integrated structures in hybrid technology" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, Bd. 2, 17. Mai 1998 (1998-05-17), Seiten 1957-1963, XP010294677 ISBN: 0-7803-4489-8
- HOFSAJER I W ET AL: "A new manufacturing and packaging technology for the integration of power electronics" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, Bd. 1, 8. Oktober 1995 (1995-10-08), Seiten 891-897, XP010193038 ISBN: 0-7803-3008-0
- PATENT ABSTRACTS OF JAPAN Bd. 2003, Nr. 07, 3. Juli 2003 (2003-07-03) -& JP 2003 088118 A (SANKEN ELECTRIC CO LTD), 20. März 2003 (2003-03-20)
- ENRICO DALLAGO ET AL: "Advances in High-Frequency Power Conversion by Delta-Sigma Modulation" IEEE TRANSACTIONS ON CIRCUITS AND SYSTEMS I: FUNDAMENTAL THEORY AND APPLICATIONS, IEEE INC. NEW YORK, US, Bd. 44, Nr. 8, August 1997 (1997-08), XP011011594 ISSN: 1057-7122

## Beschreibung

Die Erfindung betrifft einen bidirektionalen Batteriewechselrichter nach dem Oberbegriff der unabhängigen Ansprüche.

Bidirektionale Wechselrichter dienen einerseits dazu, eine DC-Batteriespannung von beispielsweise 12 Volt in eine 50 Hz oder 60 Hz AC-Spannung von z. B. 230 Volt umzuwandeln, aber auch andererseits dazu, die Batterie aus der AC-Spannung aufzuladen. Der Energiefluss findet sowohl von der Batterie zu einem DC/AC-Wandler statt als auch vom DC/AC-Wandler zur Batterie statt. Hierbei tritt das Problem auf, dass bei solchen kleinen DC-Spannungen relativ große Durchlassverluste eintreten.

Ein Wechselrichter mit einer primärseitigen Halbbrückenanordnung und einer sekundärseitigen Vollbrückenanordnung ist aus der EP 0820 893 A2 bekannt.

Aus der EP 1 458 084 A2 ist ein bidirektionaler DC-DC-Wandler bekannt. Dieser umfasst eine eingangsseitige Brückenschaltung, eine ausgangsseitige Brückenschaltung und einen zwischen beiden Schaltungen geschalteten Transformator mit einem Resonanzkondensator und eine Resonanzinduktivität.

Ein DC-AC-Wandler mit einem Transformator, der primärseitig zwei Wicklungen mit Mittenabgriff aufweist, der zu einer leistungselektronischen Mittelpunktschaltung mit Halbleiterschaltern geschaltet ist und sekundärseitig eine Wicklung aufweist, ist in der US 6,507,503 B2 gezeigt und beschrieben.

Weitere Wandler-Schaltungen sind in der DE 40 13 506 A1 und in der US 2003/0142513 A1 offenbart.

Aus der WO 2005/036684 ist ein bidirektioneller Batterie-Wechselrichter bekannt. Dieser umfasst einen DC/DC-Wandler und einen DC/AC-Wandler.

Die Veröffentlichung HOFSAJER I W ET AL "A comparative study of some electromagnetically integrated structures in hybrid technology", POWER ELECTRONICS SPECIALISTS CONFERENCE, 1998, PESC 98 RECORD. 29TH ANNUAL IEEE FUKUOKA, JAPAN 17-22 MAY 1998, NEW YORK, USA, IEEE, US, Bd. 2, 17.Mai 1998, Seiten 1957-1963, XP 010294677, ISBN: 0-7803-4489-8, beschreibt einen bidirektionellen DC-DC-Wechselrichter mit einer 12V Eingangsgleichspannung, die durch zwei Schalter einer Transformator-Mittelpunktschaltung in Wechselspannung umgewandelt wird. Sekundärseitig ist eine Vollbrücke zur Umwandlung der Wechselspannung in Gleichspannung vorgesehen. Zu jedem aktiven Schalter dieser Schaltung ist ein Kondensator parallel geschaltet, so dass bei jedem Schaltvorgang eine Umladung des parallel geschalteten Kondensators einsetzt. Dieser Umladeprozess wird so ausgeführt, dass ein spannungsloses Einschalten und ein weiches Schalten der Schalter eingestellt wird. Solche Verfahren zur Verminderung der Schaltverluste sind bekannt, und zwar als sogenannte "Phase-shift"-Verfahren. Beim Phase-shifting erfolgt nur das Einschalten verlustlos. Beim Ausschalten entstehen Verluste. Außerdem sind IGBT Schalter für das Phase-shifting schlecht geeignet, so dass in der Praxis nur GTOs eingesetzt werden können. Ein weitere Einschränkung ist, dass die Schaltung nur in einer Vollbrücke funktioniert. Der Einsatz einer Halbbrücke ist nicht möglich. Diese Schaltung hat außerdem den Nachteil, dass die Frequenz sehr stark von der Leistung und der Spannungsdifferenz abhängt. Dadurch ergeben sich unterschiedliche Frequenzen und eine komplizierte Ansteuerung. Zudem hat diese Lösung eine hohe Blindleistung und eine schlechte Bauteilausnutzung.

Die WO96/18937 A lehrt bei einem bidirektionellen Wechselrichter einen Hoch-/Tiefsetzsteller einzusetzen.

Aus der JP 2003 088118 A ist ein Batterie-Wechselrichter mit einem Hochfrequenz-Transformator bekannt, der mit einem Resonanzkondensator einen Resonanzkreis bildet. Primärseitig weist der Transformator zwei Wicklungen mit einem Mittenabgriff auf, der zu einer leistungselektronischen Mittelpunktschaltung mit Halbleiterschaltern geschaltet ist.

Die Veröffentlichung ENRICO DALLAGO ET AL: "Advantages in High-Frequency Power Conversion by Delta-Sigma Modulation" IEEE TRANSACTIONS ON CIRCUITS AND SYSTEMS I; FUNDAMENTAL THEORY AND APPLICATIONS; IEEE INC. NEW YORK, US, Bd. 44, Nr 8, August 1997, Seiten 712-721, XP 011011594 ISSN: 1057-7122 lehrt einen Resonanzkondensator bei einem bidirektionellen resonanten DC-DC-Wandler einzusetzen.

Der Erfindung liegt die Aufgabe zugrunde, einen Wechselrichter zu schaffen, der einen hohen Wirkungsgrad aufweist.

Diese Aufgabe wird durch einen Wechselrichter mit den kennzeichnenden Merkmalen der unabhängigen Ansprüche in Verbindung mit den Merkmalen des Oberbegriffs gelöst.

Durch die Erfindung werden alle Vorteile des resonanten Schaltens genutzt, ohne den Nachteil großer Durchlassverluste auf der Unterspannungsseite in Kauf nehmen zu müssen. Hierbei kann eine hohe Schaltfrequenz eingesetzt werden. Dadurch kann ein Planartransformator, der nach einer bevorzugten Ausführungsform vorgesehen ist, eingesetzt werden.

Die vorliegende Erfindung kombiniert die Vorteile von geringen Durchlassverlusten und der Einsatzmöglichkeit eines Planartransformators, ohne die Nachteile einer ungünstig hohen Transformatorscheinleistung sowie Schaltüberspannungen auf der Primärseite, einen eingeschränkten Betriebsbereich und große Durchlass- sowie Schaltverluste auf der Niederspannungsseite in Kauf nehmen zu müssen. Oder anders ausgedrückt bedeutet dies, dass mit der erfindungsgemäßen Topologie gegenüber dem Stand der Technik eine sehr verlustarme vollresonante Schaltung auf der Hochstromseite dadurch ermöglicht wird, dass in Betriebsbereichen, wo eine Spannungsanpassung erfolgen muss, die Anpassstufe (Hoch-Tiefsetzsteller) aktiviert wird.

Erfindungsgemäß ist vorgesehen, dass ein DC-AC-Wandlerschaltungsteil vorhanden ist, das an der Ausgangsseite des Wechselrichters liegt und einen Hoch-Tiefsetzsteller aufweist, der zwischen dem DC-DC-Wandler und dem DC-AC-Wandlerschaltungsteil zwischengeschaltet ist. Dadurch werden Schaltverluste durch einen nicht optimalen Betrieb, in dem der DC-DC-Wandler nicht resonant geschaltet werden kann und eine ungünstige Strom-/Spannungsauslegung im optimalen Betriebspunkt vermieden.

Erfindungsgemäß liegt die Taktfrequenz der Halbbrückenschaltung unterhalb der Resonanzfrequenz, die von der Transformatorstreuinduktivität und dem Resonanzkondensator bestimmt wird, abhängig davon, ob ein solcher Kondensator vorgesehen ist oder zwei in Reihe geschaltete Kondensatoren. Die Resonanzfrequenz ergibt sich aus der Streuinduktivität des Transformators und der Reihenresonanzkapazität bzw. aus der Streuinduktivität des Transformators und den in Reihe geschalteten Kondensatoren. Durch die Wahl dieser Taktfrequenz werden die Halbleiter sowohl stromlos ein- als auch abgeschaltet.

Wenn die Taktfrequenz der Halbbrückenschaltung unterhalb der Resonanzfrequenz liegt, die sich aus der Streuinduktivität des Transformators und der Reihenresonanzkapazität ergibt, dann sollte immer dann eingeschaltet werden, wenn der Strom null ist, da in diesem Fall die Schaltverluste gering sind bzw. nicht vorhanden sind.

Der Transformator weist gemäß einer Ausführungsform primärseitig zwei Wicklungen mit einem Mittenabgriff auf, der zu einer leistungselektronischen Mittelpunktschaltung mit Halbleiterschaltern geschaltet ist, und sekundärseitig eine Wicklung vorhanden ist, an der der Resonanzkondensator in Serie geschaltet ist.

Gemäß einer anderen Ausführungsform erfolgt eine Aufteilung in versetzt taktende Teilschaltungen.

Dadurch, dass ein resonant schaltender Teil in versetzt taktende Teilschaltungen aufgeteilt ist, ist eine geringe Kondensatorbelastung und ein geringer HF-Rippelstrom in der DC-Quelle gegeben.

Es kann gemäß einer dritten Ausführungsform ein Transformator mit zwei Resonanzkondensatoren vorhanden sein.

Es kann eine synchrone Ansteuerung des Hoch-Tiefsetzstellers und des Resonanzwandlers vorgesehen. Die synchrone Ansteuerung hat den Vorteil, dass die effektive Strombelastung in den Kondensatoren des Wechselrichters vermindert wird.

Besonders günstig ist es, wenn der Transformator als Planartransformator ausgebildet ist, wobei dieser mit zwei Leiterplatten versehen ist. Sowohl der Transformatorkern, als auch die Leiterplatten sind in einem Gehäuse untergebracht. Ein Gussgehäuse ist preiswerter herzustellen, da Vorsprünge im Gussgehäuse, die erforderlich sind, wenn ein solcher Planartransformator verwendet wird, leichter herzustellen sind. Ein Planartransformator mit zwei Leiterplatten ist darüber hinaus preiswerter herzustellen als einer mit einer großen Leiterplatte. Eine große Leiterplatte ist teurer als zwei kleine Leiterplatten.

Weitere vorteilhafte Ausgestaltungen der Erfindung sind in den Unteransprüchen beschrieben.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: ein Schaltbild eines erfindungsgemäßen DC/DC-Wandlers,
- Fig. 2: ein Ersatzschaltbild des Transformators HFT,
- Fig. 3: ein Schaltbild eines erfindungsgemäßen DC-DC-Wandlers mit zwei HF Transformatoren,
- Fig. 4: eine Schnittdarstellung eines Planartransformators, und
- Fig. 5: eine weitere Darstellung eines Planartransformators.
- Fig. 6: ein weitere Schaltbild des erfindungsgemäßen DC-DC-Wandlers mit Halbbrückenkondensatoren als Resonanzelemente;
- Fig. 7: Transformatorstrom und Transformatorspannung auf der Transformatorsekundärseite

In den Figuren sind gleiche Teile mit denselben Bezugszeichen versehen.

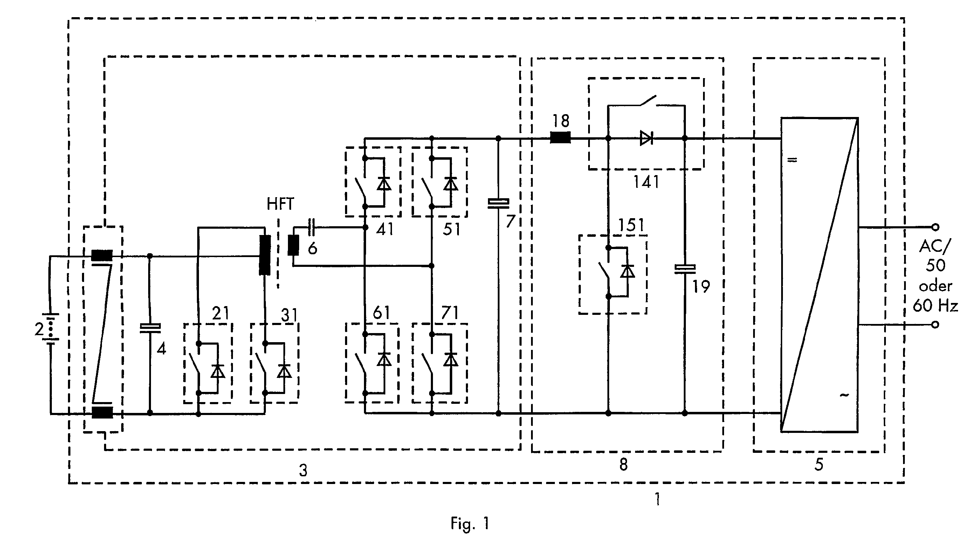

Fig. 1 zeigt einen erfindungsgemäßen Wechselrichter 1 beispielsweise für die Versorgung von AC-Verbrauchern in Inselnetzen. Dieser ist an eine Batterie 2 angeschlossen. Der Wechselrichter 1 umfasst ein DC/DC-Wandlerschaltungsteil 3 mit einem parallel an die Batterie 2 angeschlossenen Kondensator 4 und einen HF-Transformator HFT.

Weiterhin umfasst der Wechselrichter 1 ein DC/AC-Wandlerschaltungsteil 5, das an der Ausgangsseite des Wechselrichters 1 liegt und einen Hoch-Tiefsetzsteller 8, der zwischen dem DC/DC-Wandlerschaltungsteil 3 und dem DC/AC-Wandierschaltungsteil 5 zwischengeschaltet ist. Das DC/AC-Wandlerschaltungsteil 5 ist einphasig ausgebildet.

Der Wechselrichter 1 ist als bidirektionaler Batteriewechselrichter ausgebildet und dient zur Erzeugung einer AC-Ausgangsspannung aus der Batteriespannung in einem Entladebetrieb und zum Laden der Batterie 2 im Ladebetrieb. Der HF-Transformator HFT bildet mit einem Resonanzkondensator 6 einen Resonanzkreis.

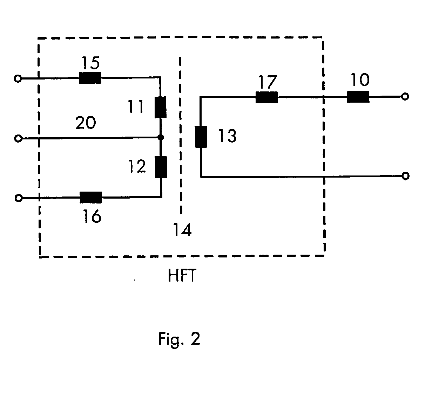

Fig. 2 zeigt ein Ersatzschaltbild des Transformators HFT. Erfindungsgemäß weist der Transformator HFT primärseitig zwei Wicklungen 11, 12 mit einem Mittelabgriff 20 auf, der zu einer leistungselektronischen Mittelpunktschaltung mit Halbleiterschaltern 21, 31 geschaltet ist, wobei sekundärseitig eine Wicklung 13 vorhanden ist, an der der Resonanzkondensator 6 in Serie geschaltet ist. Die Halbleiterschaltern 21, 31 bilden eine Mittelpunktschaltung.

In Fig. 2 sind die primärseitigen Streuinduktivitäten 15, 16 und die sekundärseitige Streuinduktivität 17 dargestellt. Mit dem Bezugszeichen 14 ist der Transformatorkern gekennzeichnet. Mit dem Bezugszeichen 20 ist der Mittelabgriff gekennzeichnet. Bezugszeichen 10 bezeichnet eine zusätzliche Induktivität.

Die Halbleiterschalter 21, 31 schalten abwechselnd und erzeugen die für die Spannungstransformation erforderliche Wechselspannung, die sekundärseitig durch die Halbleiterelemente 41, 51, 61, 71 in Brückenschaltung wieder in eine Gleichspannung umgewandelt wird und durch einen Glättungskondensator 7 geglättet wird. Der DC-DC-Wandlungsteil arbeitet in einem konstanten Betriebspunkt, so dass dessen Ein- und Ausgangsspannung in einem festen - durch das Übersetzungsverhältnis des Transformators vorgegebenen - Verhältnis zueinander stehen.

Durch die resonante Betriebsweise sind hohe Schaltfrequenzen von über 50 kHz zweckmäßig, so dass ein Planartransformator eingesetzt werden kann. Planartransformatoren können nämlich nur für Frequenzen oberhalb von 50 kHz sinnvoll eingesetzt werden.

Die Resonanzfrequenz des Wechselspannungskreises, die sich aus Streuinduktivitäten der Transformator HFT und einer Serienresonanzkapazität 6 (Fig. 1) zusammensetzt, liegt oberhalb der Taktfrequenz der Halbleiterschalter. Dadurch können die Halbleiterschalter 21, 31 sowohl stromlos ein- als auch ausgeschaltet werden.

Vorgesehen ist der Einsatz des Hoch-Tiefsetzstellers 8, um die Schaltung für stark schwankende Batteriespannungen einsetzen zu können. Durch den Hoch-Tiefsetzsteller 8 wird vermieden, dass die Zwischenspannung bei kleinen Batteriespannungen so weit einbricht, dass keine Ausgangsnennspannung mehr erreicht wird. Wenn im Ladebetrieb mit niedriger Batteriespannung im DC-DC-Wandler die Pulsbreite reduziert würde, kann kein resonanter Betrieb mehr gewährleistet werden. Dadurch würden Schaltverluste durch einen nicht optimalen Betrieb verursacht. Insbesondere wird ein Hoch-Tiefsetzsteller 8 eingesetzt, der die variable Batteriespannung auf eine konstante Spannung am Kondensator 19 anpasst. Der Hoch-Tiefsetzsteller 8 besteht aus einer Drossel 18, den Schaltelementen 141 und 151 und dem Kondensator 19. Wenn die Eingangsspannung (Batteriespannung) höher ist als z. B. 12 Volt, dann steigt die Spannung am Kondensator 19 proportional mit der Eingangsspannung an. Dann braucht der Hoch-Tiefsetzteller nicht mehr getaktet werden.

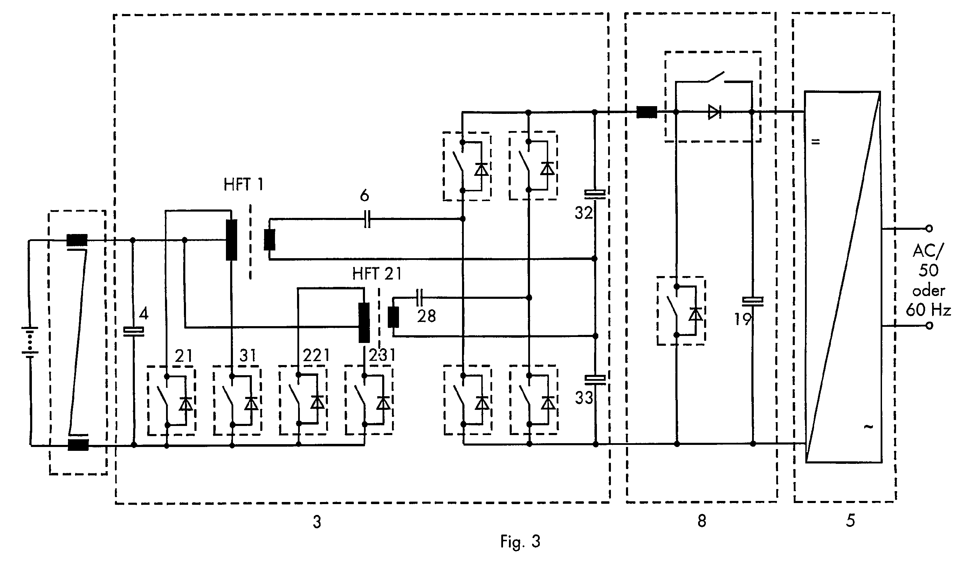

Wie Fig. 3 veranschaulicht, kann die Transformatorschaltung in zwei Teilschaltungen mit zwei HF-Transformatoren HFT1 und HFT 21 aufgebaut sein. Hierbei werden die Anordnungen versetzt getaktet, wodurch eine geringere Kondensatorbelastung und ein geringer HF-Ripplestrom in der DC-Ouelle gegeben ist. Beide der in Fig. 3 dargestellten Teilschaltungen sind als Halbbrückenanordnung ausgeführt. Bei einer Ausgestaltung mit Halbbrücken ergibt sich ein nur halb so großes Trafoübersetzungsverhältnis. Ein kleineres Transformatorübersetzungsverhältnis ist vorteilhaft, weil dann die Streuinduktivität 15 und 16 durch das Übersetzungsverhältnis transformiert von der Oberspannungsseite nicht zu groß wird.

Eine Halbbrückenanordnung benötigt weniger Halbleiterschalter und verursacht dadurch weniger Kosten.

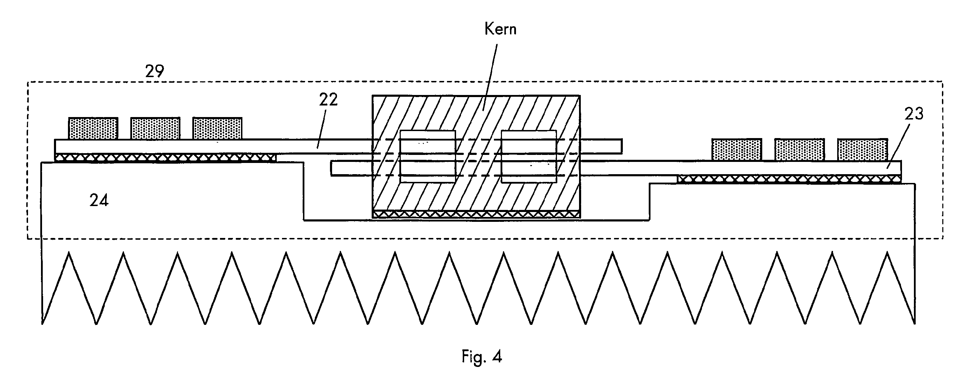

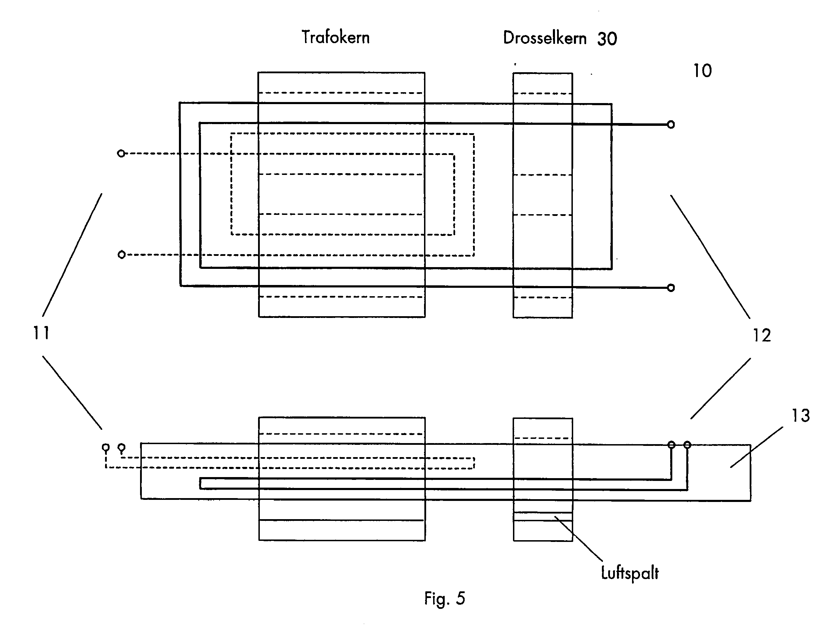

Der in Fig. 4 gezeigte Planartransformator 29 ist in einem Aluminiumgussgehäuse 24 eingebettet und weist zwei Leiterplatten 22, 23 auf. Die Leistungshalbleiter können in SMD-Bauweise ausgeführt sein. Wie in Fig. 5 gezeigt ist, weist der Transformator eine Primärwicklung 26 und eine Sekundärwicklung 27 auf, die auf einer Leiterplatte 25 angeordnet sind. Der Drosselkern 30 ist mit einem Luftspalt versehen und ist ebenfalls in die Leiterplatte 25 integriert. Er wird nur von der Sekundärwicklung 27 und nicht von der Primärwicklung 26 magnetisiert.

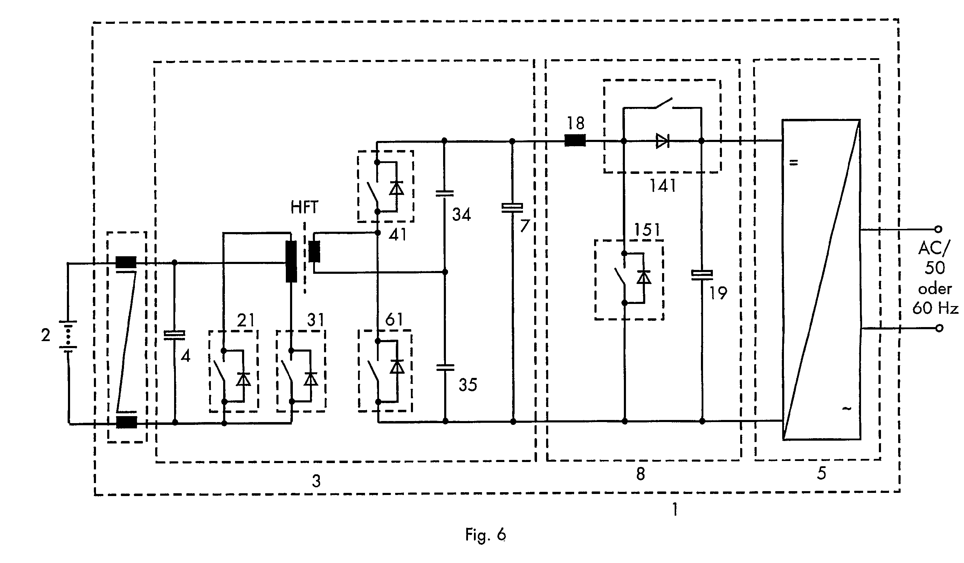

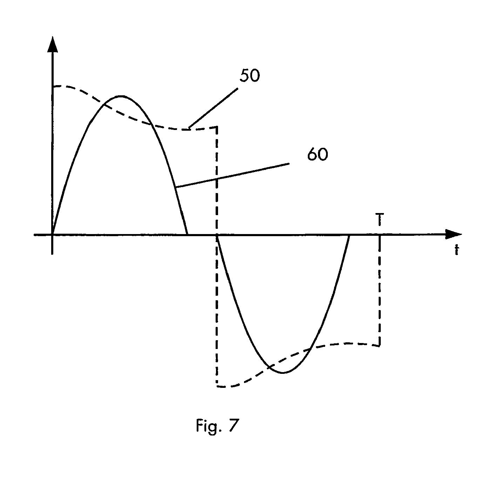

In Fig. 6 ist eine Ausgestaltung der Schaltung dargestellt, bei der die Kondensatoren 34, 35 zusammen mit der Streuinduktivität von HFT einen Resonanzkreis bilden. Bei einer solchen Ausgestaltung werden die parasitären Kondensatoren der Halbleiterschalter 21, 31 vor dem Einschalten durch die Ströme in der Hauptinduktivität des Trafos auf besonders niedrige Werte entladen. Dadurch entstehen kleinere Einschaltverluste. Die bei dieser Ausgestaltung auftretenden Transformatorströme und Spannungen auf der Sekundärseite entsprechen der Darstellung in Fig. 7. Fig. 7 zeigt Strom 60 und Spannung 50 auf der Transformatorsekundärseite.

Der DC/AC-Wandler 5 kann als H-Brücke zur Wandlung einer einphasigen AC-Spannung oder als Dreiphasenbrücke zur Wandlung einer dreiphasigen AC-Spannung ausgeführt sein.

Vorteilhaft kann auch eine Anordnung sein, bei der der DC/AC-Wandler 5 immer in der Weise betrieben wird, dass die Spannung am Kondensator 19 immer größer als der Scheitelwert der Netzspannung ist. Dadurch kann im Falle, dass die Batterie geladen wird, der DC/AC-Wandler in einem PFC-Modus (Power Factor Correction) betrieben werden und dem Netz sinusförmiger Strom in Phase zu der Netzspannung entnommen werden. Im Falle, dass die Batterie entladen wird, kann eine sinusförmige AC-Spannung bei beliebiger Stromform generiert werden.

Um beliebige Lasten (auch Schieflast und unpolare Lasten) bei dreiphasigen Umrichtern versorgen zu können, kann eine geschaltete N als vierte Phase ergänzt werden und die gesamte Schaltung so ausgeführt werden, dass der Kondensator 19 aus zwei Kondensatoren mit geerdetem Mittelpunkt besteht, wobei jeder Kondensator separat durch einen Resonanzwandler mit nachgeschaltetem Hoch-Tiefsetzsteller geladen bzw. entladen wird.

Die Halbleiter 21, 31, 41, 51, 61, 71, 141, 151 können als MOSFETs, IGBTs Bipolartransistoren oder GTOs ausgeführt werden. Die parallelen Dioden können separate Bauteile sein oder aus parasitären Dioden der eingesetzten MOSFETs bestehen.

Die DC-Gluelle 2 kann eine Batterie, eine Brennstoffzelle, ein generatorgespeister DC-Zwischenkreis oder ein Doppelschichtkondensator (Ultracap) sein.

Der Resonanzwandler kann vorteilhaft in Automobilen eingesetzt werden, um den Energieaustausch zwischen verschiedenen DC-Quellen wie Traktionsbatterie, Doppelschichtkondensator, Hilfsbetriebebatterie usw. zu ermöglichen. Dabei kann die Energieflussrichtung sich beim Beschleunigen und Bremsen umkehren.

Der Planartransformator kann vorteilhaft so ausgestaltet werden, dass die sekundäre Streuinduktivität durch die Integration einer zusätzlichen Drossel in die sekundäre Trafowicklung erhöht wird. Dass kann in der in Fig. 5 dargestellten Weise geschehen.

Im Gegensatz zu den Halb- und Vollbrückenschaltungen werden die Halbleiterspannungen der Halbleiter 21, 31, 221 und 231 nicht auf die Kondensatorspannung des Kondensators 4 begrenzt. Im Gegensatz zu normalen Mittelpunktschaltungen ist die Kondensatorspannung auch nicht auf das doppelte der Kondensatorspannung des Kondensators 4 begrenzt, sondern es kommt noch der Spannungsabfall über dem primärseitigen Anteil der Resonanzinduktivität der Transformatoren HFT 1 und HFT 21 hinzu. Dieser Effekt kann nur beherrscht werden, wenn der wesentliche Anteil der Resonanzinduktivität auf die Sekundärseite verlagert wird. Dies wird durch den beschriebenen Transformatoraufbau und/oder durch zusätzliche Resonanzinduktivitäten 10 auf der Sekundärseite erreicht.

### Liste der Bezugszeichen

- 1: Wechselrichter
- 2: Batterie
- 3: DC/DC-Wandlerschaltungsteil
- 4: Kondensator
- 5: DC/AC-Wandierschaltungsteil
- 6: Resonanzkondensator
- 7: Glättungskondensator
- 8: Hoch-Tiefsetzsteller

- 10: zusätzliche Streuinduktivität
- 11, 12: primärseitige Wicklungen
- 13: sekundärseitige Wicklung
- 14: Transformatorkern
- 15, 16: primärseitige Streuinduktivitäten
- 17: Streuinduktivität
- 18: Drossel
- 19: Kondensator

- 20: Mittelabgriff
- 21: Halbleiterschalter
- 22, 23: Leiterplatten
- 24: Aluminiumgussgehäuse
- 25: Leiterplatte
- 26: Primärwicklung
- 27: Sekundärwicklung
- 28: Resonanzkondensator
- 29: Planartransformator
- 30: Drosselkern

- 31: Halbleiterschalter
- 32, 33: Halbbrückenkondensatoren
- 34, 35: Halbbrückenkondensatoren als Resonanzelemente
- 41, 51, 61, 71: Halbleiterelemente
- 50: sekundärseitige Transformatorspannung
- 60: sekundärseitiger Transformatorstrom
- 141, 151: Halbleiterschalter
- HFT: HF-Transformator
- HFT 1, HFT 21: HF-Transformatoren
- LSP: Luftspalt
- 221,231: Schalterelement

## Patentansprüche

1. Bidirektionaler Batteriewechselrichter (1) mit einem DC-DC-Wandlerschaltungsteil (3), an dem die Batterie (2) anschließbar ist, zur Erzeugung einer AC-Ausgangsspannung aus einer Batteriespannung der Batterie (2) in einem Entladebetrieb und zum Laden der Batterie (2) in einem Ladebetrieb, **dadurch gekennzeichnet, dass** der Wechselrichter (1) einen HF-Transformator umfasst, der mit einem Resonanzkondensator (6) einen Resonanzkreis bildet,
- dass der Transformator primärseitig zwei Wicklungen (11, 12) mit einem Mittenabgriff (20) aufweist, der zu einer leistungselektronischen Mittelpunktschaltung mit Halbleiterschaltern (21, 31) geschaltet ist, und sekundärseitig eine Wicklung (13) vorhanden ist, die mit dem Resonanzkondensator (6) in Serie geschaltet ist, und
- dass ein DC-AC-Wandlerschaltungsteil (5) vorhanden ist, das an der Ausgangsseite des Wechselrichters (1) liegt, dass ein Hochsetz- oder Tiefsetzsteller (8) vorhanden ist, der zwischen dem DC-DC-Wandlerschaltungsteil (3) und dem DC-AC-Wandlerschaltungsteil (5) zwischengeschaltet ist
- wobei die Resonanzfrequenz aus der Streuinduktivität des Transformators (HFT) und einer Serienresonanzkapazität (6) oberhalb der Taktfrequenz der Halbleiterschalter (21, 31) liegt,
- wobei durch die Wahl der Taktfrequenz die Halbleiterschalter sowohl stromlos ein- als auch ausgeschaltet werden.

2. Bidirektionaler Batteriewechselrichter (1) mit einem DC-DC-Wandlerschaltungsteil (3), an dem die Batterie (2) anschließbar ist, zur Erzeugung einer AC-Ausgangsspannung aus einer Batteriespannung der Batterie (2) in einem Entladebetrieb und zum Laden der Batterie (2) in einem Ladebetrieb, **dadurch gekennzeichnet, dass** der Wechselrichter (1) einen HF-Transformator umfasst, der mit Resonanzkondensatoren (6, 28) einen Resonanzkreis bildet,
- dass ein resonant schaltender Teil in versetzt taktende Teilschaltungen aufgeteilt ist, wobei eine Transformatorschaltung mit zwei Transformatoren (HFT1, HFT2) aufgebaut ist, sowie jeder Transformator (HFT1, HFT2) primärseitig zwei Wicklungen (11, 12) mit einem Mittelabgriff (20) aufweist, der zu einer leistungselektronischen Mittelpunktschaltung mit Halbleiterschaltern (21, 31; 221, 231) geschaltet ist, und sekundärseitig eine Wicklung (13) aufweist, die mit je einem der Resonanzkondensatoren (6, 28) in Serie geschaltet ist,
- dass ein DC-AC-Wandlerschaltungsteil (5) vorhanden ist, das an der Ausgangsseite des Wechselrichters (1) liegt, und dass ein Hochsetz- oder Tiefsetzsteller (8) vorhanden ist, der zwischen dem DC-DC-Wandlerschaltungsteil (3) und dem DC-AC-Wandlerschaltungsteil (5) zwischengeschaltet ist,
- wobei die Resonanzfrequenz aus der Streuinduktivität der Transformatoren (HFT1, HFT2) und der Kondensatoren (6, 28) oberhalb der Taktfrequenz der Halbleiterschalter (21, 31; 221, 231) liegt,
- wobei durch die Wahl der Taktfrequenz die Halbleiterschalter sowohl stromlos ein- als auch ausgeschaltet werden.

3. Bidirektionaler Batteriewechselrichter (1) mit einem DC-DC-Wandlerschaltungsteil (3), an dem die Batterie (2) anschließbar ist, zur Erzeugung einer AC-Ausgangsspannung aus einer Batteriespannung der Batterie (2) in einem Entladebetrieb und zum Laden der Batterie (2) in einem Ladebetrieb, **dadurch gekennzeichnet, dass** der Wechselrichter (1) einen HF-Transformator umfasst, der mit Resonanzkondensatoren (34, 35) einen Resonanzkreis bildet,
- dass der Transformator primärseitig zwei Wicklungen (11, 12) mit einem Mittenabgriff (20) aufweist, der zu einer leistungselektronischen Mittelpunktschaltung mit Halbleiterschaltern (21, 31) geschaltet ist, und sekundärseitig eine Wicklung (13) aufweist, die mit den Resonanzkondensatoren (34, 35) an einem Summenpunkt verbunden ist, und
- dass ein DC-AC-Wandlerschaltungsteil (5) vorhanden ist, das an der Ausgangsseite des Wechselrichters (1) liegt, dass ein Hochsetz- oder Tiefsetzsteller (8) vorhanden ist, der zwischen dem DC-DC-Wandlerschaltungsteil (3) und dem DC-AC-Wandlerschaltungsteil (5) zwischengeschaltet ist,
- wobei die Resonanzfrequenz aus der Streuinduktivität des Transformators HFT und der Kondensatoren (34, 35) oberhalb der Taktfrequenz der Halbleiterschalter (21, 31) liegt,
- wobei durch die Wahl der Taktfrequenz die Halbleiterschalter sowohl stromlos ein- als auch ausgeschaltet werden.

4. Bidirektionaler Batteriewechselrichter nach einem der vorhergehenden Ansprüche 1 oder 3,
**dadurch gekennzeichnet,**
**dass** der DC-DC-Wandlerschaltungsteil (3) eine Halbbrücke umfasst.

5. Bidirektionaler Batteriewechselrichter nach Anspruch 2,
**dadurch gekennzeichnet,**
**dass** der DC-DC-Wandlerschaltungsteil (3) zwei Halbbrücken mit Halbleiterschalter (21, 31; 221, 231) umfasst.

6. Bidirektionaler Batteriewechselrichter nach einem der vorhergehenden Ansprüche,
**dadurch gekennzeichnet,**
**dass** jeder Transformator als Planartransformator (29) ausgebildet ist.

7. Bidirektionaler Batteriewechselrichter nach Anspruch 6,
**dadurch gekennzeichnet,**
**dass** die Primärwicklungen des Transformators nur um den Trafokem, die Sekundärwicklung aber um den Trafokern und einen zusätzlichen Drosselkern (30) geführt sind.

## Claims

1. Bidirectional battery DC-AC converter (1) with a DC-DC converter circuit part (3), with which the battery (2) is connectible, for generating an AC output voltage from a battery voltage of the battery (2) in a discharging operation and for charging the battery (2) in a charging operation,
**characterised in that**
- the DC-AC converter (1) comprises an HF transformer forming, together with a resonance capacitor (6), a capacitor circuit,
- the transformer has at the primary side two windings (11, 12) with a centre tap (20), which is connected with a power-electronic centre point circuit with semiconductor switches (21, 31), and at the secondary side a winding (13) is present which is connected in series with the resonance capacitor (6), and
- a DC-AC converter circuit part (5) is present, which lies at the output side of the DC-AC converter (1), a high-setting setter or low-setting setter (8) being present, which is connected between the DC-DC converter circuit part (3) and the DC-AC converter circuit part (5),
- wherein the resonance frequency of the stray inductance of the transformer (HFT) and of a series resonance capacitance (6) lies above the clock rate of the semiconductor switches (21, 31),
- wherein through selection of the clock rate the semiconductor switches are switched both on and off free of current.

2. Bidirectional battery DC-AC converter (1) with a DC-DC converter circuit part (3), with which the battery (2) is connectible, for generating an AC output voltage from a battery voltage of the battery (2) in a discharging operation and for charging the battery (2) in a charging operation,
**characterised in that**
- the DC-AC converter (1) comprises an HF transformer forming, together with resonance capacitors (6, 28), a capacitor circuit,
- a resonant switching part is divided up into part circuits with displaced clocking, wherein one transformer circuit is constructed with two transformers (HFT1, HFT2), and each transformer (HFT1, HFT2) has at the primary side two windings (11, 12) with a centre tap (20), which is connected with a power-electronic centre point circuit with semiconductor switches (21, 31; 221, 231), and at the secondary side has a winding (13) connected in series with a respective one of the resonance capacitors (6, 28),
- a DC-AC converter circuit part (5) is present, which lies at the output side of the DC-AC converter (1), a high-setting setter or low-setting setter (8) being present, which is connected between the DC-DC converter circuit part (3) and the DC-AC converter circuit part (5),
- wherein the resonance frequency of the stray inductance of the transformers (HFT1, HFT2) and of the capacitors (6, 28) lies above the clock rate of the semiconductor switches (21, 31),
- wherein through selection of the clock rate the semiconductor switches are switched both on and off free of current.

3. Bidirectional battery DC-AC converter (1) with a DC-DC converter circuit part (3), with which the battery (2) is connectible, for generating an AC output voltage from a battery voltage of the battery (2) in a discharging operation and for charging the battery (2) in a charging operation,
**characterised in that**
- the DC-AC converter (1) comprises an HF transformer forming, together with resonance capacitors (34, 35), a capacitor circuit,
- the transformer has at the primary side two windings (11, 12) with a centre tap (20), which is connected with a power-electronic centre point circuit with semiconductor switches (21, 31), and has at the secondary side a winding (13) connected with the resonance capacitors (34, 35) at a summation point, and
- a DC-AC converter circuit part (5) is present, which lies at the output side of the DC-AC converter (1), a high-setting setter or low-setting setter (8) being present, which is connected between the DC-DC converter circuit part (3) and the DC-AC converter circuit part (5),
- wherein the resonance frequency of the stray inductance of the transformer (HFT) and of the capacitors (34, 35) lies above the clock rate of the semiconductor switches (21, 31),
- wherein through selection of the clock rate the semiconductor switches are switched both on and off free of current.

4. Bidirectional battery DC-AC converter according to one of the preceding claims 1 and 3, **characterised in that** the DC-DC converter circuit part (3) comprises a half-bridge.

5. Bidirectional battery DC-AC converter according to claim 2, **characterised in that** the DC-DC converter circuit part (3) comprises two half-bridges with semiconductor switches (21, 31; 221, 231).

6. Bidirectional battery DC-AC converter according to any one of the preceding claims, **characterised in that** each transformer is constructed as a planar transformer (29).

7. Bidirectional battery DC-AC converter according to claim 6, **characterised in that** the primary windings of the transformer are led only around the transformer core, but the secondary winding is led around the transformer core and an additional choke core (30).

## Revendications

1. Onduleur de batterie bidirectionnel (1) comprenant une partie formant un circuit convertisseur DC-DC (3) à laquelle la batterie (2) peut être connectée et qui est destinée à produire une tension de sortie AC à partir d'une tension de la batterie (2) dans un régime de décharge et à charger la batterie (2) dans un régime de charge,
**caractérisé**
- **en ce que** l'onduleur (1) comprend un transformateur HF qui forme un circuit résonant avec un condensateur de résonance (6),
- **en ce que** le transformateur comporte, sur son côté primaire, deux enroulements (11, 12) comportant une prise médiane (20) qui est connectée à un circuit électronique de puissance à point central comportant des commutateurs statiques (21, 31) et, sur son côté secondaire, est prévu un enroulement (13), qui est connecté en série avec le condensateur de résonance (6), et
- **en ce qu'**il est prévu une partie formant un circuit convertisseur DC-AC (5) qui se trouve sur le côté sortie de l'onduleur (1), en ce qu'il est prévu un organe de réglage haut ou de réglage bas (8) qui est intercalé entre la partie formant le circuit convertisseur DC-DC (3) et la partie formant circuit le convertisseur DC-AC (5),
- la fréquence de résonance résultant de l'inductivité de fuite du transformateur (HFT) et d'une capacité de résonance série (6) étant supérieure à la fréquence de cadence des commutateurs statiques (21, 31),
- les commutateurs statiques étant aussi bien connectés que déconnectés, hors tension par la sélection de la fréquence de cadence.

2. Onduleur de batterie bidirectionnel (1) comprenant une partie formant un circuit convertisseur DC-DC (3) à laquelle la batterie (2) peut être connectée et qui est destinée à produire une tension de sortie AC à partir d'une tension de la batterie (2) dans un régime de décharge et à charger la batterie (2) dans un régime de charge,
**caractérisé**
- **en ce que** l'onduleur (1) comprend un transformateur HF qui forme un circuit résonant avec des condensateurs de résonance (6, 28),
- **en ce qu'**une partie commutatrice résonante est subdivisée en circuits partiels à cadences décalées, un circuit transformateur étant composé de deux transformateurs (HFT1, HFT2) et chaque transformateur (HFT1, HFT2) comportant, sur son côté primaire, deux enroulements (11, 12) comportant une prise médiane (20) qui est connectée à un circuit électronique de puissance à point central comportant des commutateurs statiques (21, 31 ; 221, 231) et, sur son côté secondaire, un enroulement (13) qui est connecté en série à chaque fois à un des condensateurs de résonance (6, 28)
- **en ce qu'**il est prévu une partie formant un circuit convertisseur DC-AC (5) qui se trouve sur le côté sortie de l'onduleur (1), et en ce qu'il est prévu un organe de réglage haut ou de réglage bas (8) qui est intercalé entre la partie formant le circuit convertisseur DC-DC (3) et la partie formant le circuit convertisseur DC-AC (5),
- la fréquence de résonance résultant de l'inductivité de fuite des transformateurs (HFT1, HTF2) et des condensateurs (6, 28) étant supérieure à la fréquence de cadence des commutateurs statiques (21, 31 : 221, 231),
- les commutateurs statiques étant aussi bien connectés que déconnectés, hors tension par la sélection de la fréquence de cadence.

3. Onduleur de batterie bidirectionnel (1) comprenant une partie formant un circuit convertisseur DC-DC (3) à laquelle la batterie (2) peut être connectée et qui est destinée à produire une tension de sortie AC à partir d'une tension de la batterie (2) dans un régime de décharge et à charger la batterie (2) dans un régime de charge,
**caractérisé**
- **en ce que** l'onduleur (1) comprend un transformateur HF qui forme un circuit résonnant avec des condensateurs de résonance (34, 35),
- **en ce que** le transformateur comporte, sur son côté primaire, deux enroulements (11,12) comportant une prise médiane (20) qui est connectée à un circuit électronique de puissance à point central comportant des commutateurs statiques (21, 31) et, sur son côté secondaire, un enroulement (13) qui est connecté avec les condensateurs de résonance (34, 35) à un point de sommation, et
- **en ce qu'**il est prévu une partie formant un circuit convertisseur DC-AC (5) qui se trouve sur le côté sortie de l'onduleur (1), en ce qu'il est prévu un organe de réglage haut ou de réglage bas (8) qui est intercalé entre la partie formant le circuit convertisseur DC-DC (3) et la partie formant le circuit convertisseur DC-AC (5),
- la fréquence de résonance résultant de l'inductivité de fuite du transformateur (HFT) et des condensateurs (34, 35) étant supérieure à la fréquence de cadence des commutateurs statiques (21, 31),
- les commutateurs statiques étant aussi bien connectés que déconnectés, hors tension par la sélection de la fréquence de cadence.

4. Onduleur de batterie bidirectionnel selon l'une des revendications précédentes 1 ou 3,
**caractérisé**
**en ce que** la partie formant le circuit convertisseur DC-DC (3) comprend un demi-pont.

5. Onduleur de batterie bidirectionnel selon la revendication 2,
**caractérisé**
**en ce que** la partie formant le circuit convertisseur DC-DC (3) comprend deux demi-ponts avec commutateurs statiques (21, 31 ; 221,231).

6. Onduleur de batterie bidirectionnel selon l'une des revendications précédentes,
**caractérisé**
**en ce que** chaque transformateur est constitué par un transformateur à structure plane (29).

7. Onduleur de batterie bidirectionnel selon la revendication 6,
**caractérisé**
**en ce que** les enroulements primaires du transformateur entourent uniquement le noyau du transformateur, tandis que l'enroulement secondaire entoure le noyau du transformateur et un noyau de réactance additionnel (30).
